(19) Europäisches Patentamt
European Patent Office
Office européen des brevets

(11) **EP 3 929 411 A1**

(12) **EUROPEAN PATENT APPLICATION**

(43) Date of publication:
**29.12.2021 Bulletin 2021/52**

(51) Int Cl.:
**F01K 25/10** (2006.01)     **F02C 3/34** (2006.01)
**F01D 25/26** (2006.01)     **F01D 11/02** (2006.01)
**F01D 25/04** (2006.01)     **F01D 15/10** (2006.01)

(21) Application number: **21178206.5**

(22) Date of filing: **08.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.06.2020   JP 2020108030**

(71) Applicant: **Toshiba Energy Systems & Solutions Corporation
Saiwai-ku
Kawasaki-shi
Kanagawa (JP)**

(72) Inventors:
• **Iwai, Shogo**
  **Kawasaki-shi, Kanagawa (JP)**
• **Tashima, Tsuguhisa**
  **Kawasaki-shi, Kanagawa (JP)**
• **Ono, Takahiro**
  **Kawasaki-shi, Kanagawa (JP)**
• **Hino, Takehisa**
  **Kawasaki-shi, Kanagawa (JP)**
• **Oinuma, Shun**
  **Kawasaki-shi, Kanagawa (JP)**

(74) Representative: **Hoffmann Eitle
Patent- und Rechtsanwälte PartmbB
Arabellastraße 30
81925 München (DE)**

(54) **SUPERCRITICAL CO2 TURBINE**

(57)     The supercritical $CO_2$ turbine in an embodiment includes: a rotary body; a stationary body housing the rotary body inside; and a turbine stage including a stator blade cascade in which a plurality of stator blades are supported inside the stationary body, and a rotor blade cascade in which a plurality of rotor blades are supported by the rotary body inside the stationary body, in which a supercritical $CO_2$ working medium is introduced into the inside of the stationary body and flows via the turbine stage in an axial direction of the rotary body to thereby rotate the rotary body. Here, a thermal conductivity k1 and a specific heat c1 of a material constituting the rotary body and a thermal conductivity k2 and a specific heat c2 of a material constituting the stationary body satisfy a relationship represented by the following formula (A).

$$k1/c1 \leq k2/c2 \quad .... \text{ formula (A)}$$

FIG.1

**Description**

FIELD

Embodiments described herein relate generally to a supercritical $CO_2$ turbine.

BACKGROUND

A supercritical $CO_2$ turbine is configured such that a $CO_2$ working medium in a supercritical state is introduced into a turbine casing to thereby rotate a turbine rotor.

In the supercritical $CO_2$ turbine, similarly to the case of a steam turbine, since the $CO_2$ working medium is introduced at high pressure, the $CO_2$ working medium is likely to leak from a sealing part provided between a rotary body such as a turbine rotor and a stationary body such as the turbine casing, and there arises a problem of a reduction in turbine performance. Further, since a supercritical $CO_2$ turbine power generation system including the supercritical $CO_2$ turbine constitutes a closed cycle, it is more greatly affected by a reduction in plant efficiency due to an increase in a cooling flow rate than the case of a gas turbine power generation system with a Brayton cycle. An improvement in turbine performance requires a pressure loss at the sealing part to be large, along with which a gap between the rotary body and the stationary body is thus required to be made small.

At a start time or at a stop time of the supercritical $CO_2$ turbine, the number of rotations of the turbine rotor greatly varies, and vibrations occur. As a result, since the sealing part is sometimes scraped by rubbing, a leakage amount of the $CO_2$ working medium sometimes increases at the time of rated operation.

Further, at the start time of the supercritical $CO_2$ turbine, in the case where the turbine rotor expands before an inner casing supporting a stator blade in a double-structured turbine casing including the inner casing and an outer casing expands, the turbine rotor approaches the stator blade, and at the same time, a rotor blade supported by the turbine rotor approaches the inner casing. As a result, since gaps between the turbine rotor and the stator blade and between the rotor blade and the inner casing are made small, the sealing part provided in the gap between the rotary body and the stationary body is sometimes damaged by the rubbing.

Thus, in the conventional supercritical $CO_2$ turbine, due to the occurrence of the rubbing in a transient state such as at the start time, the leakage amount of the $CO_2$ working medium at the time of the rated operation is difficult to reduce, and therefore the turbine efficiency is not easy to improve.

Accordingly, a problem to be solved by the present invention is to provide a supercritical $CO_2$ turbine which prevents the occurrence of rubbing at the start time to allow the improvement in the turbine efficiency to be realized.

BRIEF DESCRIPTION OF THE DRAWINGS

FIG. 1 is a diagram schematically illustrating an entire configuration of a supercritical $CO_2$ turbine power generation system according to an embodiment.
FIG. 2 is a side view schematically illustrating a side surface of a supercritical $CO_2$ turbine 10 in the supercritical $CO_2$ turbine power generation system according to the embodiment.
FIG. 3 is a cross-sectional view schematically illustrating a partial cross section of the supercritical $CO_2$ turbine according to the embodiment.

DETAILED DESCRIPTION

A supercritical $CO_2$ turbine in an embodiment includes: a rotary body; a stationary body housing the rotary body inside; and a turbine stage including a stator blade cascade in which a plurality of stator blades are supported inside the stationary body, and a rotor blade cascade in which a plurality of rotor blades are supported by the rotary body inside the stationary body, in which a supercritical $CO_2$ working medium is introduced into the inside of the stationary body and flows via the turbine stage in an axial direction of the rotary body to thereby rotate the rotary body. Here, a thermal conductivity k1 and a specific heat c1 of a material constituting the rotary body and a thermal conductivity k2 and a specific heat c2 of a material constituting the stationary body satisfy a relationship represented by a following formula (A).

$$k1/c1 \leq k2/c2 \quad \dots \text{ formula (A)}$$

[Configuration of Supercritical $CO_2$ turbine power generation system]

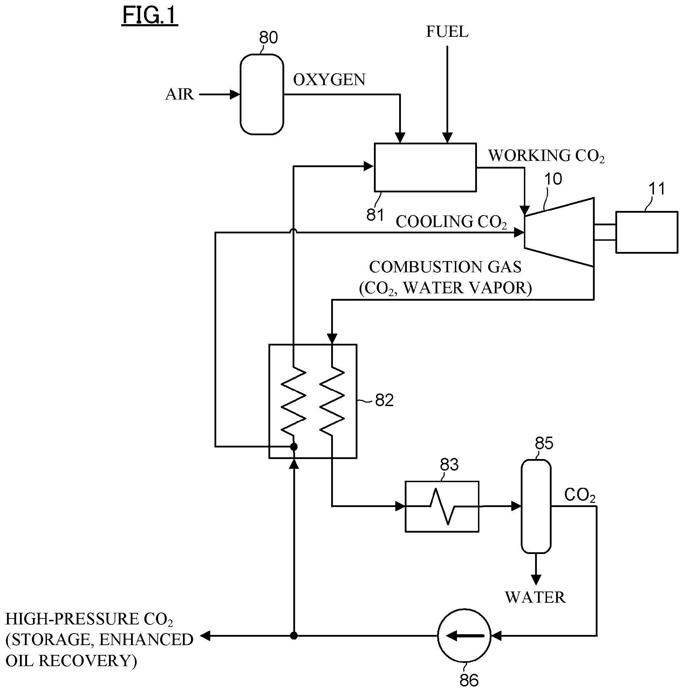

A supercritical $CO_2$ turbine power generation system according to an embodiment will be explained using FIG. 1.

As illustrated in FIG. 1, in the supercritical $CO_2$ turbine power generation system of this embodiment, parts are configured to constitute a closed cycle using a supercritical $CO_2$ working medium as a working medium. The parts constituting the supercritical $CO_2$ turbine power generation system of this embodiment will be explained in sequence.

In the supercritical $CO_2$ turbine power generation system of this embodiment, to a supercritical $CO_2$ turbine 10, the $CO_2$ working medium in a supercritical state is supplied from a combustor 81. Then, in the supercritical $CO_2$ turbine 10, the $CO_2$ working medium expands to work, thereby rotating a rotary shaft of the supercritical $CO_2$ turbine 10. The medium exhausted from the supercritical $CO_2$ turbine 10 flows to a regenerative heat exchanger 82.

A power generator 11 is configured to generate electricity by the driving of the supercritical $CO_2$ turbine 10. Here, a rotary shaft of the power generator 11 is coupled to the rotary shaft of the supercritical $CO_2$ turbine 10, and the rotary shaft of the supercritical $CO_2$ turbine 10 is rotated, thereby rotating the rotary shaft of the power generator 11 to generate electricity in the power generator 11.

The regenerative heat exchanger 82 is configured such that the medium exhausted from the supercritical $CO_2$ turbine 10 and a medium discharged from a $CO_2$ pump 86 flow thereinto to perform a heat exchange between the mediums. Here, the medium exhausted from the supercritical $CO_2$ turbine 10 is cooled by the heat exchange in the regenerative heat exchanger 82. On the other hand, the medium discharged from the $CO_2$ pump 86 is heated by the heat exchange in the regenerative heat exchanger 82 to be supplied to the combustor 81.

A cooler 83 cools the medium exhausted from the supercritical $CO_2$ turbine 10 and thereafter subjected to the heat exchange in the regenerative heat exchanger 82. This causes water vapor contained in the medium discharged from the regenerative heat exchanger 82 to be condensed in the cooler 83.

A moisture separator 85 is supplied with the medium discharged from the cooler 83. The moisture separator 85 separates water produced by the condensation in the cooler 83 (liquid-phase water) from the supplied medium. The separated water is discharged from the moisture separator 85 to the outside. This causes a medium containing high-purity $CO_2$ to be obtained in the moisture separator 85.

The $CO_2$ pump 86 is supplied with the medium being high-purity $CO_2$ from the moisture separator 85, and pressurizes the supplied medium to a supercritical pressure. A part of the medium pressurized by the $CO_2$ pump 86 is discharged to the outside, and utilized for, for example, storage, enhanced oil recovery, and the like. Here, for example, $CO_2$ corresponding to an amount of $CO_2$ increased by combustion in the combustor 81 is discharged to the outside. Then, the remainder of the medium pressurized by the $CO_2$ pump 86 is supplied to the regenerative heat exchanger 82 to be heated therein as described above.

A partial medium extracted from the middle of the regenerative heat exchanger 82 is supplied to the supercritical $CO_2$ turbine 10 as a $CO_2$ cooling medium. Then, the remainder of the medium having passed through the regenerative heat exchanger 82 is led to the combustor 81. That is, in the regenerative heat exchanger 82, the medium pressurized by the $CO_2$ pump 86 is heated by the heat exchange for the medium exhausted from the supercritical $CO_2$ turbine 10, thereafter flowing into the combustor 81.

[Configuration of Supercritical $CO_2$ turbine 10]

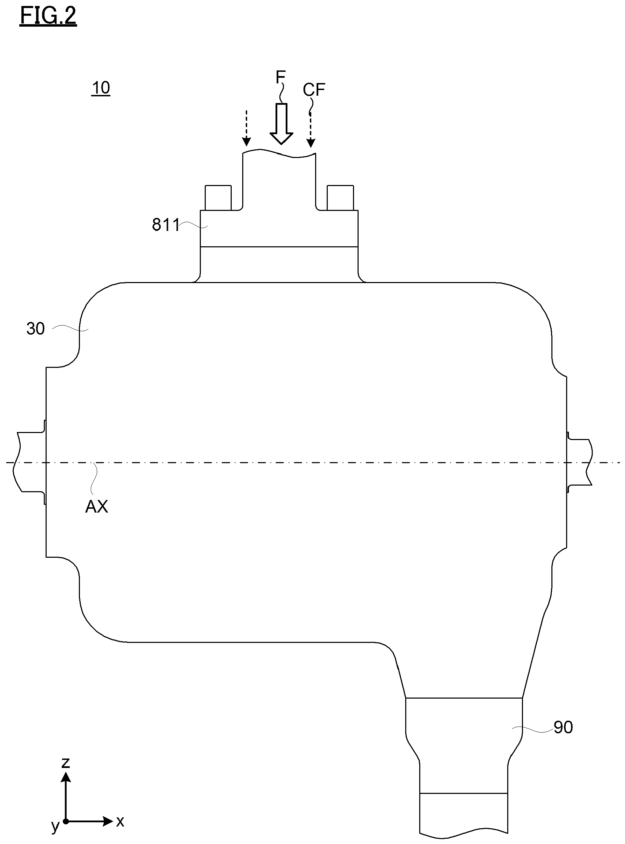

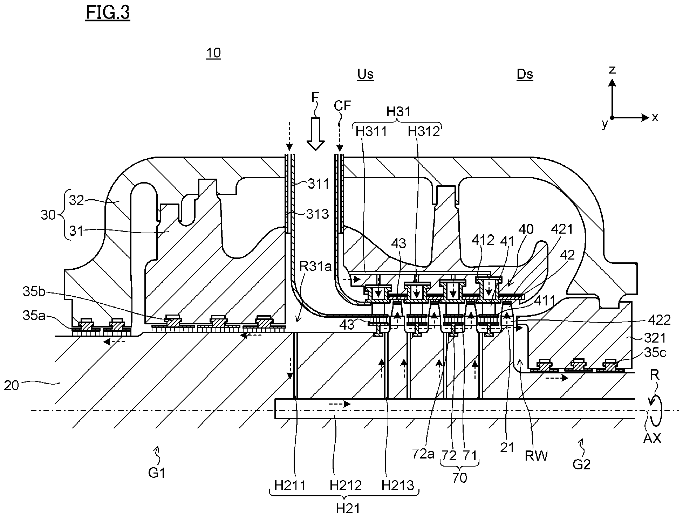

One example of the supercritical $CO_2$ turbine 10 according to the embodiment will be explained using FIG. 2 and FIG. 3.

FIG. 2 schematically illustrates a side surface of the supercritical $CO_2$ turbine 10. FIG. 3 schematically illustrates a partial cross section of the supercritical $CO_2$ turbine 10. In FIG. 3, a longitudinal direction is a vertical direction z, a lateral direction is a first horizontal direction x, and a direction perpendicular to a paper sheet is a second horizontal direction y. FIG. 3 schematically illustrates the partial cross section (cross section mainly on an upper half side) of a vertical plane (xz plane).

In the supercritical $CO_2$ turbine 10 according to the embodiment, as illustrated in FIG. 2, a $CO_2$ working medium F is introduced via a combustor casing 811 into the inside.

As illustrated in FIG. 3, the supercritical $CO_2$ turbine 10 includes a turbine rotor 20, a turbine casing 30, and a turbine stage 40. The supercritical $CO_2$ turbine 10 is of a multistage type, in which a plurality of turbine stages 40 are disposed side by side in an axial direction (x) along a rotation center axis AX of the turbine rotor 20. In the supercritical $CO_2$ turbine 10, the $CO_2$ working medium F is introduced via a transition piece 311 into the inside of an inner casing 31 housed in an outer casing 32 of the turbine casing 30. Then, the introduced $CO_2$ working medium F works sequentially in the plurality of turbine stages 40 disposed side by side from an upstream side Us to a downstream side Ds.

Thereafter, the $CO_2$ working medium F is discharged via an exhaust pipe 90 to the outside of the turbine casing 30, as illustrated in FIG. 2.

Details on parts constituting the supercritical $CO_2$ turbine 10 according to the embodiment will be explained in sequence.

The turbine rotor 20 is a rod-shaped body, and is supported to be rotatable by a bearing (not illustrated) so that the rotation center axis AX is along the first horizontal direction x. At the turbine rotor 20, a plurality of rotor wheels 21 are provided on the outer peripheral surface. The plurality of rotor wheels 21 are arranged side by side in the axial direction (x) along the rotation center axis AX Though an illustration is omitted in FIG. 3, the turbine rotor 20 is coupled to the power generator.

The turbine casing 30 has a double-casing structure, and has the inner casing 31 and the outer casing 32.

In the turbine casing 30, the inner casing 31 is installed around the turbine rotor 20 in a manner to surround the plurality of turbine stages 40.

In the turbine casing 30, the outer casing 32 is configured to house the turbine rotor 20 via the inner casing 31.

Further, in the outer casing 32, a packing head 321 is installed on the downstream side Ds and at an inner portion in a radial direction further than the final-stage turbine stage 40. Here, a final-stage wheel space RW intervenes between the packing head 321 and a final-stage rotor wheel 21 in the axial direction.

The turbine stage 40 includes a stator blade cascade composed of a plurality of stator blades 41 (nozzle blades), and a rotor blade cascade composed of a plurality of rotor blades 42. The turbine stage 40 is composed of the stator blade cascade and the rotor blade cascade adjacent to the stator blade cascade on the downstream side Ds, and the plurality of turbine stages 40 are disposed side by side in the axial direction along the rotation center axis AX.

The plurality of stator blades 41 (nozzle blades) constituting the stator blade cascade are supported inside the inner casing 31. The plurality of stator blades 41 are arranged in a rotation direction R in a manner to surround the turbine rotor 20 between an inner shroud 411 and an outer shroud 412.

The plurality of rotor blades 42 constituting the rotor blade cascade are arranged in the rotation direction R in a manner to surround the turbine rotor 20 inside the inner casing 31. In the rotor blade 42, an implanted part 422 is provided at an inner portion in the radial direction. The implanted part 422 is fitted on the outer peripheral surface of the rotor wheel 21 of the turbine rotor 20. The outer periphery of the rotor blade 42 is surrounded by a shroud segment 421. The shroud segment 421 is supported by the outer shroud 412.

At a portion facing the stator blade 41 of the outer peripheral surface of the turbine rotor 20, for example, a heat insulating piece 70 is provided. Here, the heat insulating piece 70 is supported by a portion facing the inner peripheral surface of the inner shroud 411 on the outer peripheral surface of the turbine rotor 20. The heat insulating piece 70 is provided to insulate heat between a main flow path through which the $CO_2$ working medium F flows inside the turbine casing 30 and the turbine rotor 20.

The heat insulating piece 70 includes a heat insulating plate 71 and a leg part 72, and the heat insulating plate 71 and the leg part 72 are provided in sequence as going from the outside to the inside in the radial direction of the turbine rotor 20.

In the heat insulating piece 70, the heat insulating plate 71 includes a portion extending along the rotation center axis AX of the turbine rotor 20. The heat insulating plate 71 is installed to have a gap intervening between the outer peripheral surface of the heat insulating plate 71 and the inner peripheral surface of the inner shroud 411 and have a space intervening between the inner peripheral surface of the heat insulating plate 71 and the outer peripheral surface of the turbine rotor 20. The leg part 72 extends in the radial direction of the turbine rotor 20, and an engagement part 72a is formed inside in the radial direction in the leg part 72. The engagement part 72a is engaged with the turbine rotor 20.

In order to seal a clearance between the inner peripheral surface of the stator blade 41 and the outer peripheral surface of the heat insulating plate 71, a seal fin 43 is provided as necessary. Further, in order to seal a clearance between the outer peripheral surface of the rotor blade 42 and the inner peripheral surface of the shroud segment 421 provided in the inner casing 31, the seal fin 43 is provided.

The supercritical $CO_2$ turbine 10 includes an upstream-side gland part G1 and a downstream-side gland part G2.

The upstream-side gland part G1 is one end portion located on the upstream side Us of the $CO_2$ working medium F of both end portions where the turbine stage 40 is not disposed in the axial direction in the supercritical $CO_2$ turbine 10. The downstream-side gland part G2 is one end portion located on the downstream side Ds of the $CO_2$ working medium F of both the end portions where the turbine stage 40 is not disposed in the axial direction in the supercritical $CO_2$ turbine 10. In other words, a portion where the turbine stages 40 are disposed in the axial direction in the supercritical $CO_2$ turbine 10 is sandwiched between the upstream-side gland part G1 and the downstream-side gland part G2.

In the upstream-side gland part G1 and the downstream-side gland part G2, gland sealing parts 35a, 35b, 35c are installed. The gland sealing parts 35a, 35b, 35c are provided to seal a clearance between the rotary body including the turbine rotor 20 and the stationary body including the turbine casing 30.

Specifically, a plurality of the gland sealing parts 35a are installed on the inner peripheral surface of the outer casing 32 in a manner to seal a clearance between the inner peripheral surface of the outer casing 32 and the outer peripheral surface of the turbine rotor 20 in the upstream-side gland part G1. A plurality of the gland sealing parts 35b are installed on the inner peripheral surface of the inner casing 31 in a manner to seal a clearance between the inner peripheral surface of the inner casing 31 and the outer peripheral surface of the turbine rotor 20 in the upstream-side gland part G1. Then, a plurality of the gland sealing parts 35c are installed on the inner peripheral surface of the packing head 321 in a manner to seal a clearance between the inner peripheral surface of the packing head 321 installed in the inner casing 31 and the outer peripheral surface of the turbine rotor 20 in the downstream-side gland part G2.

The gland sealing parts 35a, 35b, 35c are each configured to include, for example, a labyrinth fin. Other than that, the gland sealing parts 35a, 35b, 35c may be composed of various seal structures such as a brush seal, a leaf seal, an abradable seal, and a honeycomb seal.

The transition piece 311 includes a portion extending in the radial direction in a manner to penetrate the outer casing 32 and the inner casing 31 from above the turbine casing 30. The transition piece 311 is coupled to the initial-stage turbine stage 40 so as to introduce the $CO_2$ working medium F into the initial-stage turbine stage 40.

A cooling medium introduction pipe 313 extends, similarly to the transition piece 311, in the radial direction in a manner to penetrate the outer casing 32 and the inner casing 31 from above the turbine casing 30. The cooling medium introduction pipe 313 is installed in a manner to surround a portion extending in the radial direction in the transition piece 311. The inside diameter of the cooling medium introduction pipe 313 is larger than the outside diameter of the portion extending in the radial direction in the transition piece 311, and the $CO_2$ cooling medium CF flows between the inner peripheral surface of the cooling medium introduction pipe 313 and the outer peripheral surface of the portion extending in the radial direction in the transition piece 311. The $CO_2$ cooling medium CF flowing between the cooling medium introduction pipe 313 and the transition piece 311 is introduced into a cooling chamber R31a formed in a manner to surround, in the rotation direction R, the turbine rotor 20 inside the inner casing 31.

In the inner casing 31, an inner casing cooling medium flow path H31 is formed through which the $CO_2$ cooling medium CF flows. The inner casing cooling medium flow path H31 is provided to supply the $CO_2$ cooling medium CF to the stator blade 41 of the turbine stage 40. Here, the inner casing cooling medium flow path H31 includes a first inner casing cooling medium flow path part H311 and a second inner casing cooling medium flow path part H312.

The first inner casing cooling medium flow path part H311 is a hole along the axial direction of the turbine rotor 20, in which one end located on the upstream side Us of the $CO_2$ working medium F is communicated with the cooling chamber R31a.

The second inner casing cooling medium flow path part H312 is a hole along the radial direction of the turbine rotor 20, and is formed further inside than the first inner casing cooling medium flow path part H311 in the radial direction. In the second inner casing cooling medium flow path part H312, one end on the outside in the radial direction is communicated with the first inner casing cooling medium flow path part H311. In contrast to this, the other end on the inside in the radial direction of the second inner casing cooling medium flow path part H312 is communicated with the stator blade 41 via the outer shroud 412.

The inner casing cooling medium flow path H31 is provided one each, for example, on the upper half side and the lower half side in the supercritical $CO_2$ turbine 10. It is preferable that a plurality of the inner casing cooling medium flow paths H31 are provided at regular intervals in the rotation direction R.

In the turbine rotor 20, a rotor cooling flow path H21 is formed through which the $CO_2$ cooling medium CF flows. The rotor cooling flow path H21 is configured so that the $CO_2$ cooling medium CF flows from the cooling chamber R31a to a space located between the inner peripheral surface of the heat insulating plate 71 and the outer peripheral surface of the turbine rotor 20. Here, the rotor cooling flow path H21 includes a first rotor cooling flow path part H211, a second rotor cooling flow path part H212, and a third rotor cooling flow path part H213.

The first rotor cooling flow path part H211 is a hole along the radial direction of the turbine rotor 20. In the first rotor cooling flow path part H211, one end on the outside in the radial direction is communicated with the cooling chamber R31a. In contrast to this, the other end on the inside in the radial direction of the first rotor cooling flow path part H211 is communicated with the second rotor cooling flow path part H212.

The second rotor cooling flow path part H212 is a hole along the axial direction of the turbine rotor 20, and is provided coaxially with the rotation center axis AX of the turbine rotor 20.

The third rotor cooling flow path part H213 is a hole along the radial direction of the turbine rotor 20. In the third rotor cooling flow path part H213, one end on the inside in the radial direction is communicated with the second rotor cooling flow path part H212. In contrast to this, the other end on the outside in the radial direction of the third rotor cooling flow path part H213 is communicated with the space located between the inner peripheral surface of the heat insulating plate 71 and the outer peripheral surface of the turbine rotor 20. The third rotor cooling flow path part H213 is provided to correspond to each of the plurality of turbine stages 40.

The flow of the $CO_2$ cooling medium CF in the above supercritical $CO_2$ turbine 10 will be explained.

In the supercritical $CO_2$ turbine 10, as illustrated in FIG. 2, the $CO_2$ cooling medium CF is introduced from the outside via the combustor casing 811 into the inside of the turbine casing 30. Here, as illustrated in FIG. 1, the $CO_2$ cooling medium CF is a medium exhausted from the supercritical $CO_2$ turbine 10 and thereafter subjected to cooling or the like, and is introduced into the supercritical $CO_2$ turbine 10 in a state where it is lower in temperature than the $CO_2$ working medium F and higher in pressure than the $CO_2$ working medium F.

Specifically, the $CO_2$ cooling medium CF flows through a cooling medium introduction pipe 313 into the inside of the inner casing 31 as illustrated in FIG. 3. The $CO_2$ cooling medium CF goes through between an outer peripheral surface of the transition piece 311 and an inner peripheral surface of the cooling medium introduction pipe 313 to be introduced into the cooling chamber R31a provided inside the inner casing 31.

The $CO_2$ cooling medium CF introduced into the cooling chamber R31a is supplied through the inner casing cooling medium flow path H31 formed in the inner casing 31 to the stator blade 41 in each of the plurality of turbine stages 40. Specifically, the $CO_2$ cooling medium flowing into the inner casing cooling medium flow path H31 is introduced into a space provided on the outside in the radial direction in the outer shroud 412. The space provided on the outside in the radial direction in the outer shroud 412 is a space communicated in a ring shape in the rotation direction R, and is communicated with, for example, cooling holes (not illustrated) formed inside the respective stator blade 41 and inner shroud 411. The $CO_2$ cooling medium CF sequentially flows from the outer shroud 412 through the cooling holes formed in the respective stator blade 41 and inner shroud 411. This causes the stator blade 41 and the like to be cooled. Then, the $CO_2$ cooling medium CF used for the cooling of the stator blade 41 is discharged to, for example, the main flow path through which the $CO_2$ working medium F flows inside the inner casing 31.

Further, the $CO_2$ cooling medium CF introduced into the cooling chamber R31a is introduced into the rotor cooling flow path H21 formed in the turbine rotor 20. Here, the $CO_2$ cooling medium CF sequentially flows through the first rotor cooling flow path part H211, the second rotor cooling flow path part H212, and the third rotor cooling flow path part H213 in the rotor cooling flow path H21. Then, the $CO_2$ cooling medium CF flows to the space located between the inner peripheral surface of the heat insulating plate 71 constituting the heat insulating piece 70 and the outer peripheral surface of the turbine rotor 20. Then, for example, the $CO_2$ cooling medium CF passes between the implanted part 422 of the rotor blade 42 and the rotor wheel 21 to be introduced into the rotor blade 42. This causes the turbine rotor 20 and the rotor blade 42 to be cooled. The $CO_2$ cooling medium CF introduced into the rotor blade 42 is discharged to, for example, the main flow path through which the $CO_2$ working medium F flows inside the inner casing 31.

In the final-stage turbine stage 40, the $CO_2$ cooling medium CF flowing into the space located between the inner peripheral surface of the heat insulating plate 71 and the outer peripheral surface of the turbine rotor 20 is introduced into the rotor blade 42, and in addition, flows to the final-stage wheel space RW located on the downstream side Ds further than the final-stage rotor wheel 21 in the axial direction. The $CO_2$ cooling medium CF flowing to the final-stage wheel space RW leaks from the inside to the outside of the turbine casing 30 in the downstream-side gland part G2. Specifically, in the downstream-side gland part G2, the $CO_2$ cooling medium CF flows between the inner peripheral surface of the packing head 321 provided with the gland sealing parts 35c and the outer peripheral surface of the turbine rotor 20.

In addition to the above, the $CO_2$ cooling medium CF introduced into the cooling chamber R31a leaks from the inside to the outside of the turbine casing 30 in the upstream-side gland part G1. Specifically, in the upstream-side gland part G1, the $CO_2$ cooling medium CF flows, from the cooling chamber R31a, between the inner peripheral surface of the inner casing 31 provided with the gland sealing parts 35b and the outer peripheral surface of the turbine rotor 20. Thereafter, the $CO_2$ cooling medium CF flows between the inner peripheral surface of the outer casing 32 provided with the gland sealing parts 35a and the outer peripheral surface of the turbine rotor 20.

[Regarding Material constituting Turbine rotor 20 and Inner casing 31]

(Thermal conductivity/Specific heat)

In the supercritical $CO_2$ turbine 10 of this embodiment, a thermal conductivity k1 and a specific heat c1 of a material constituting the turbine rotor 20 being the rotary body and a thermal conductivity k2 and a specific heat c2 of a material constituting the inner casing 31 being the stationary body satisfy a relationship represented by the following formula (A).

$$k1/c1 \leq k2/c2 \qquad \text{... formula (A)}$$

The thermal conductivities k1, k2 each indicate a thermal conductibility (diffusibility) per unit time, and are each a value obtained by dividing a quantity of heat flowing per unit time by a temperature gradient per unit length. The specific heats c1, c2 each indicate a heat quantity necessary for a temperature to rise by 1°C per unit mass. For this reason, the values obtained by dividing the thermal conductivities k1, k2 by the specific heats c1, c2 (k1/c1, k2/c2) each indicate a measure of easiness of temperature rise per unit time.

The formula (A) indicates that a rate at which the temperature rises per unit time in the case of the material constituting the inner casing 31 (k2/c2) is equal to or more than a rate in the case of the material constituting the turbine rotor 20 (k1/c1). That is, in this embodiment, the temperature of the inner casing 31 rises at the same rate as that of the turbine rotor 20, or rises at a higher rate than that of the turbine rotor 20.

In the case where the temperature of the inner casing 31 rises at the same rate as the temperature of the turbine rotor 20, gaps between the turbine rotor 20 and the stator blade 41 and between the rotor blade 42 and the inner casing 31 have the same width, and are not made small.

In the case where the temperature of the inner casing 31 rises before the temperature of the turbine rotor 20 rises, the gaps between the turbine rotor 20 and the stator blade 41 and between the rotor blade 42 and the inner casing 31 extend, and are not made small.

As a result, in this embodiment, in a state where a temperature rises such as at a start time of the supercritical $CO_2$ turbine 10, the turbine rotor 20 does not expand before the inner casing 31 expands. Therefore, the turbine rotor 20 does not approach the stator blade 41, and at the same time, the rotor blade 42 supported by the turbine rotor 20 does not approach the inner casing 31. That is, at the start time of the supercritical $CO_2$ turbine, the gaps between the turbine rotor 20 and the stator blade 41 and between the rotor blade 42 and the inner casing 31 are unlikely to be made small.

Accordingly, in this embodiment, since the sealing parts such as the seal fins 43 are unlikely to be damaged by the rubbing in the gaps between the turbine rotor 20 and the stator blade 41 and between the rotor blade 42 and the inner casing 31, it is possible to effectively prevent a reduction in turbine performance. Note that in the cooling structure of this embodiment, since the turbine rotor 20 and the inner casing 31 have the same cooling source to be cooled to the same temperature, a thermal expansion difference caused by a difference in cooling temperature does not occur, and thus the relationship of the formula (A) is important.

(Linear expansion coefficient)

Furthermore, in the supercritical $CO_2$ turbine 10 of this embodiment, it is preferable that a linear expansion coefficient $\alpha 1$ of the material constituting the turbine rotor 20 being the rotary body and a linear expansion coefficient $\alpha 2$ of the material constituting the inner casing 31 being the stationary body satisfy a relationship represented by the following formula (B).

$$\alpha 2 \leq \alpha 1 \qquad ... \text{ formula (B)}$$

The formula (B) indicates that a rate of expansion with respect to the rise in temperature in the case of the material constituting the inner casing 31 ($\alpha 2$) is equal to or less than a rate in the case of the material constituting the turbine rotor 20 ($\alpha 1$). That is, in this embodiment, the inner casing 31 expands at the same rate as the turbine rotor 20, or expands at a lower rate than the turbine rotor 20.

For this reason, at the time of rated operation of the supercritical $CO_2$ turbine 10, since the turbine rotor 20 expands more than the inner casing 31, the turbine rotor 20 approaches the stator blade 41, and at the same time, the rotor blade 42 supported by the turbine rotor 20 approaches the inner casing 31. That is, the gaps between the turbine rotor 20 and the stator blade 41 and between the rotor blade 42 and the inner casing 31 are made small.

Accordingly, in the supercritical $CO_2$ turbine 10 of this embodiment, since a leakage amount of the $CO_2$ working medium at the time of the rated operation is reduced, it is possible to improve the turbine performance. Note that setting the widths of the gaps in consideration of the gaps to be made small at the time of the rated operation of the supercritical $CO_2$ turbine 10 enables the prevention of contact between the turbine rotor 20 and the stator blade 41 and contact between the rotor blade 42 and the inner casing 31. Note that when the turbine rotor 20 is formed of a material having a smaller linear expansion coefficient than that of the inner casing 31, the gaps at the installation time are required to be made small in order to make the gaps at the time of the rated operation the same as those in the case of satisfying the formula (B). In that case, in the case of not satisfying the formula (B), since the gaps at the start time are also small, a rubbing risk is increased.

(Specific material)

It is preferable that the material constituting the turbine rotor 20 and the material constituting the inner casing 31 are, for example, heat-resistant steels containing a Cr component. For example, it is preferable that the turbine rotor 20 and the inner casing 31 are formed using a high-Cr steel containing a Cr component of not less than 9 mass% nor more than 12 mass% and a low-alloy steel containing a Cr component of not less than 1.25 mass% nor more than 2.25 mass%.

The metallic materials constituting the turbine rotor 20, the inner casing 31, and so on are oxidized by $CO_2$ introduced as the $CO_2$ working medium under conditions of specific pressure and temperature. However, as described above, when the turbine rotor 20, the inner casing 31, and so on are formed using the metallic materials containing the Cr components, it is possible to suppress the occurrence of the oxidation due to $CO_2$.

Furthermore, since the $CO_2$ working medium introduced into the supercritical $CO_2$ turbine 10 has a high pressure and a large density, destabilizing force at the sealing part is large. Using the high-Cr steel makes it possible to easily produce the turbine rotor 20 whose solid ratio is high and which has a large-size mono-block structure. Therefore, it is possible to obtain the turbine rotor 20 which has a high rigidity and is excellent in safety.

Note that it is also suitable that the turbine rotor 20 is produced using a Ni-based alloy. Among heat-resistant alloys used for turbines, since the Ni-based alloy has a larger linear expansion coefficient and a smaller thermal conductivity as compared with the heat-resistant steel, it is likely to satisfy the conditions of the formula (A) and the formula (B), and excellent in strength at high temperatures.

<Others>

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, the above embodiment explains the case of satisfying the relationships represented by the above-described formula (A) and formula (B) regarding the material constituting the turbine rotor 20 being the rotary body and the material constituting the inner casing 31 being the stationary body, but is not limited to this. In the case where the turbine casing 30 is constituted of a single casing without being constituted of the plurality of casings such as the double casing structure, by satisfying the relationships represented by the above-described formula (A) and formula (B) regarding a material constituting the turbine casing 30 having the single casing, a similar effect can be achieved.

REFERENCE SIGNS LIST

10 ... turbine, 11 ... power generator, 12 ... turbine, 20 ... turbine rotor, 21 ... rotor wheel, 30 ... turbine casing, 31 ... inner casing, 32 ... outer casing, 35a ... gland sealing part, 35b ... gland sealing part, 35c ... gland sealing part, 40 ... turbine stage, 41 ... stator blade, 42 ... rotor blade, 43 ... seal fin, 70 ... heat insulating piece, 71 ... heat insulating plate, 72 ... leg part, 72a ... engagement part, 80 ... oxygen generator, 81 ... combustor, 82 ... regenerative heat exchanger, 83 ... cooler, 85 ... moisture separator, 86 ... $CO_2$ pump, 90 ... exhaust pipe, 311 ... transition piece, 313 ... cooling medium introduction pipe, 321 ... packing head, 411 ... inner shroud, 412 ... outer shroud, 421 ... shroud segment, 422 ... implanted part, 811 ... combustor casing, AX ... rotation center axis, CF ... cooling medium, Ds ... downstream side, F ... $CO_2$ working medium, G1 ... upstream-side gland part, G2 ... downstream-side gland part, H21 ... rotor cooling flow path, H211 ... first rotor cooling flow path part, H212 ... second rotor cooling flow path part, H213 ... third rotor cooling flow path part, H31 ... inner casing cooling medium flow path, H311 ... first inner casing cooling medium flow path part, H312 ... second inner casing cooling medium flow path part, R ... rotation direction, R31a ... cooling chamber, RW ... final-stage wheel space, Us ... upstream side

**Claims**

1. A supercritical $CO_2$ turbine comprising:

   a rotary body;
   a stationary body housing the rotary body inside; and
   a turbine stage including a stator blade cascade in which a plurality of stator blades are supported inside the stationary body, and a rotor blade cascade in which a plurality of rotor blades are supported by the rotary body inside the stationary body, in which
   a supercritical $CO_2$ working medium is introduced into the inside of the stationary body and flows via the turbine stage in an axial direction of the rotary body to thereby rotate the rotary body, wherein
   a thermal conductivity k1 and a specific heat c1 of a material constituting the rotary body and a thermal conductivity k2 and a specific heat c2 of a material constituting the stationary body satisfy a relationship represented by a following formula (A).

$$k1/c1 \leq k2/c2 \quad \ldots \text{formula (A)}$$

2. The supercritical $CO_2$ turbine according to claim 1, wherein
   a linear expansion coefficient $\alpha1$ of the material constituting the rotary body and a linear expansion coefficient $\alpha2$ of the material constituting the stationary body satisfy a relationship represented by a following formula (B).

$$\alpha2 \leq \alpha1 \quad \ldots \text{formula (B)}$$

## FIG.1

FIG.2

10

F  CF

811

30

AX

90

z
y  x

FIG.3

Europäisches
Patentamt

European
Patent Office

Office européen
des brevets

# EUROPEAN SEARCH REPORT

Application Number

EP 21 17 8206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/328210 A1 (MOLL RANDALL W [US] ET AL) 15 November 2018 (2018-11-15) * paragraphs [0003], [0004], [0028]; figures 1-9 * ----- | 1,2 | INV. F01K25/10 F02C3/34 F01D25/26 F01D11/02 F01D25/04 F01D15/10 |
| A | US 8 806 874 B2 (TOSHIBA KK [JP]) 19 August 2014 (2014-08-19) * column 7, line 43 - line 46; figure 9 * ----- | 1,2 | |

TECHNICAL FIELDS
SEARCHED (IPC)

F01K
F22G
F02K
F02C
F01D

The present search report has been drawn up for all claims

| Place of search | Date of completion of the search | Examiner |
|---|---|---|
| Munich | 28 October 2021 | Klados, Iason |

EPO FORM 1503 03.82 (P04C01)

## ANNEX TO THE EUROPEAN SEARCH REPORT
## ON EUROPEAN PATENT APPLICATION NO.

EP 21 17 8206

This annex lists the patent family members relating to the patent documents cited in  the above-mentioned European search report.
The members are as contained in the European Patent Office EDP file on
The European Patent Office is in no way liable for these particulars which are merely given for the purpose of information.

28-10-2021

| Patent document cited in search report | | Publication date | Patent family member(s) | | Publication date |
|---|---|---|---|---|---|
| US 2018328210 | A1 | 15-11-2018 | NONE | | |
| US 8806874 | B2 | 19-08-2014 | CN | 103573297 A | 12-02-2014 |
| | | | EP | 2687680 A2 | 22-01-2014 |
| | | | JP | 5865204 B2 | 17-02-2016 |
| | | | JP | 2014020320 A | 03-02-2014 |
| | | | US | 2014020391 A1 | 23-01-2014 |

EPO FORM P0459

For more details about this annex : see Official Journal of the European Patent Office, No. 12/82